# EUROPÄISCHE PATENTSCHRIFT

(11) **EP 1 155 083 B1**
(45) Veröffentlichungstag und Bekanntmachung des Hinweises auf die Patenterteilung: **15.09.2004**
(21) Anmeldenummer: 00912348.0
(22) Anmeldetag: 03.02.2000
(51) Int. Cl.: C08L 23/16, C08L 91/00, C08L 21/00

(54) **THERMOPLASTISCHES VULKANISAT UND VERFAHREN ZUR HERSTELLUNG**
THERMOPLASTIC VULCANIZATE AND ITS METHOD OF PRODUCTION
PRODUIT DE VULCANISATION THERMOPLASTIQUE ET PROCEDE DE PRODUCTION

(30) Priorität: 15.02.1999 DE 19906002
(43) Veröffentlichungstag der Anmeldung: 21.11.2001
(73) Patentinhaber: PolyOne Corporation, Avon Lake OH 44012-2343 (US)
(72) Erfinder: VORTKORT, Jörg, D-21442 Toppenstedt (DE); GRÄBNER, Friedrich, Wilhelm, D-21435 Stelle (DE); BONTEMPS, Andre, D-21079 Hamburg (DE); VOLKMANN, Stefan, D-29348 Eschede (DE)
(74) Vertreter: Brandl, Ferdinand Anton, Dipl.-Phys.
(86) Internationale Anmeldenummer: PCT/DE2000/000329
(87) Internationale Veröffentlichungsnummer: WO 2000/049086

(56) Entgegenhaltungen:
- EP-A- 0 092 318
- EP-A- 0 216 193
- EP-A- 0 735 091
- EP-A- 0 850 991
- US-A- 5 384 366

## Beschreibung

Die Erfindung betrifft ein thermoplastisches Vulkanisat.

Thermoplastische Vulkanisate sind ein Blend, bestehend aus einem thermoplastischen Kunststoff und einem vernetzten Elastomeren. Die Vernetzung des Elastomeren geschieht durch dynamische Vulkanisation. Unter dem Begriff dynamische Vulkanisation versteht man ein Verfahren, bei dem der thermoplastische Kunststoff, der Kautschuk und das Vernetzungssystem mastifiziert werden, während der Kautschuk vernetzt. Beispiele für dynamisch vernetzte thermoplastische Elastomere und das Verfahren der dynamischen Vulkanisation sind in den Patenten US-A-4 130 535 und US-A-4 311 628 beschrieben. In der Offenlegungsschrift DE-A-26 32 654 ist ein Blend aus einem thermoplastischen Polyolefin, einem EPDM-Kautschuk und einem beliebigen aus US-A-3 806 558 bekannten Vernetzungssystem beschrieben. Der Kautschuk ist bis zu einem solchen Ausmaß vulkanisiert, daß er nicht mehr als etwa drei Prozent in Cyclohexan bei 23°C extrahierbaren Kautschuk enthält. Die GB-A-2 007 683 beschreibt ein thermoplastisches Elastomer, beinhaltend ein thermoplastisches kristallines Polyolefinharz und vulkanisiertes EPDM. Die Vemetzung des Kautschuks erfolgt mit einem Phenolharz. Der erzielte Vernetzungsgrad ist größer als 97 %. In WO-A-98/58020 wird ferner ein TPE-Blend auf Basis eines thermoplastischen Olefins, eines EPDM-Kautschuks und eines Ethylen-Octen Copolymeren (EOC) beschrieben. Die in dieser Druckschrift vorgestellten thermoplastischen Vulkanisate werden ohne weichmachende Öle hergestellt. Desweiteren wird ein neuartiges Vernetzungssystem eingesetzt. Das Vernetzungssystem besteht aus einem Phenolharz und einem Oxid auf Basis Mg, Pb oder Zn. Dieses System führt dabei zu einem teilweisen Vernetzen des EOC.
Nachteilig an dem beschriebenen TPE ist die rezepturbedingte hohe Ölquellung. Desweiteren wird durch ein teilweises Vernetzen des EOC die Fließfähigkeit verschlechtert. Aufgrund des hohen Polymergehaltes ist zudem mit erhöhten Rohstoffkosten zu rechnen.

In der EP-B-0 107 635 wird darauf verwiesen, daß die bis dahin üblichen Mischverfahren zur Herstellung der dynamisch vulkanisierten thermoplastischen Elastomere nicht dazu geeignet sind, weiche Mischungen mit guter Extrudierbarkeit herzustellen. Es wird ein Einstufenverfahren im gleichsinnig drehenden Doppelschneckenextruder beschrieben, welches bei hohen Schergeschwindigkeiten > 2000s-1 und einer Verweilzeit < 2 min die Fertigung gut extrudierbarer weicher thermoplastischer Elastomere ermöglicht.

Die Entwicklung und Produktion von kostengünstigen weichen thermoplastischen Vulkanisaten ist für das weitere Vordringen der TPE in Anwendungsgebiet der klassischen Elastomere besonders wichtig. Unter weichen thermoplastischen Vulkanisaten sollen im folgenden Materialien mit einer Härte kleiner 70 Shore A (dieser Wert bezieht sich auf Messungen an extrudierten Flachprofilen) verstanden werden. Da die Ölaufnahme der Kautschukphase begrenzt ist, lassen sich durch die Zugabe von Weichmacherölen minimal Härten von ca. 50 Shore A bei thermoplastischen Vulkanisaten auf Basis EPDM/PP erreichen (EP-A-0 757 077). Bereits in diesem Härtebereich führt der zunehmende Ölanteil zu einem Abfall der mechanischen Eigenschaften und zu erhöhten Fogging-Werten. Auch ein Ausschwitzen des Öles an die Formteiloberfläche ist möglich. Folgende Daten sollen hier beispielhaft erwähnt werden. Bezogen auf 100 Teile Kautschuk enthält ein thermoplastisches Vulkanisat mit einer Härte von 50 Shore A ca. 150 bis 200 Teile Öl. Um den verfahrenstechnischen Aufwand beim Einmischen des Weichmacheröles in einem wirtschaftlich vertretbaren Rahmen zu halten, werden bevorzugt ölverstreckte EPDM-Kautschuke eingesetzt. Ein Nachteil ist aber auch hierbei, daß die ölverstreckten EPDM-Typen im Verhältnis zu den unverstreckten EPDM-Typen teurer sind. Die am Markt erhältlichen mit 75 bzw. 100 Teilen ölverstreckten EPDM-Typen enthalten zudem aromatenhaltige Weichmacheröle, so daß bei Bewitterung eine Verfärbung eintritt. Besonders problematisch ist daher die Herstellung von hellen, weichen thermoplastischen Vulkanisaten. Bei den am Markt vorhandenen dynamischen Vulkanisaten auf Basis EPDM/PP kann die Verfärbung nur durch einen entsprechend großen rohstoffseitigen Aufwand begrenzt, aber nicht komplett unterbunden werden.

Die Zugabe von Styrolblockcopolymeren, die ebenfalls zu einer Reduzierung der Härte führt, ist teuer und reduziert zudem die Bewitterungsstabilität.

In der nachfolgend aufgeführten Patentliteratur werden Rezepturen und Verfahrensvarianten vorgestellt, die die Fertigung von thermoplastischen Vulkanisaten erlauben. In der EP-A-0 757 077 ist ein sehr weiches thermoplastisches Vulkanisat (< 60 Shore A, bevorzugt < 45 Shore A) beschrieben. Dieses Vulkanisat besteht aus zwei vulkanisierten Kautschuken EPDM und BR bzw. SBR bzw. CR und einer größeren Menge Prozeßöl. Die vulkanisierten Kautschuke liegen als fein verteilte disperse Phase in der Thermoplastmatrix vor. In WO-A-97/39059 wird ein weiches thermoplastisches Vulkanisat mit teilvernetzer Kautschukphase vorgestellt, welches bevorzugt aus einem thermoplastischen Polyethylen oder Polypropylen (Homo- bzw. Copolymer), einem amorphen Polypropylen und einem EPDM bzw. BR-Kautschuk besteht. Die Zugabe des amorphen Polypropylen findet bevorzugt erst nach der dynamischen Vulkanisation des Kautschuks statt.

Schließlich wird noch auf die EP-A-0 092 318 verwiesen, wobei in dieser Offenlegungsschrift ein Thermoplast-Blend aus einem Polyolefin und einem elastomeren Weichmacher vorgestellt wird. Dabei ist die wesentliche Zielsetzung, hochwertige Polypropylen-Folien auf Polyethylen-Verarbeitungsmaschinen herstellen zu können.

Da die bisher bekannten thermoplastischen Vulkanisate mit den Nachteilen eines höheren verfahrenstechnischen Aufwandes und/oder hohen Kosten verbunden sind, liegt nun der Erfindung die Aufgabe zugrunde, ein kostengünstigeres, weiches thermoplastisches Vulkanisat zu entwickeln, welches eine geringere Verfärbungsneigung bei Bewitterung aufweist.

Gelöst wird diese Aufgabe durch ein thermoplastisches Vulkanisat mit einer Zusammensetzung gemäß Patentanspruch 1, wobei in den Patentansprüchen 2 bis 7 zweckmäßige Werkstoffparameter genannt sind.

Darüber hinaus besteht die Aufgabe der Erfindung darin, das erfindungsgemäße thermoplastische Vulkanisat ohne erhöhten verfahrenstechnischen Aufwand herzustellen.

In diesem Zusammenhang beinhalten die Patentansprüche 8 bis 18 zweckmäßige Verfahrensschritte.

Das erfindungsgemäße thermoplastische Vulkanisat und das Verfahren zu seiner Herstellung wird nun im folgenden näher beschrieben.

Gemäß Patentanspruch 1 besteht das thermoplastische Vulkanisat aus vier Komponenten (A, B, C, D), nämlich:
- einem thermoplastischen Kunststoff (A);
- einem im wesentlichen unvernetzten Polyethylen (B);
- einem mindestens teilvulkanisierten Kautschuk (C) und
- einem Weichmacher (D);
sowie ferner aus üblichen Mischungsingredienzien (E), wobei nun die einzelnen Werkstoffgruppen detaillierter vorgestellt werden.

### Thermoplastischer Kunststoff (A)

Verwendet werden können hier beliebige thermoplastische Kunststoffe, beispielsweise Polystyrol, Polyamid, Polyester oder Polypropylen, u.a. in Form von Kunststoffgemischen. Der bevorzugt eingesetzte Kunststoff ist ein Polypropylen auf der Basis eines Homopolymeren, Blockpolymeren oder Copolymeren, vorzugsweise wiederum in Verbindung mit einer hohen Kristallinität.

Der Anteil des thermoplastischen Kunststoffes beträgt 5 bis 20 Gew.-%, und zwar bezogen auf die Summe der vier Komponenten (A, B, C, D).

### Unvernetztes Polyethylen (B)

Das im wesentlichen unvernetzte Polyethylen ist vorzugsweise ein VLDPE (Very Low Densitiy Polyethylen) mit einer Dichte von 0,88 bis 0,91 g/cm³ bei 20°C und/oder ein ULDPE (Ultra Low Density Polyethylen) mit einer Dichte von 0,85 bis 0,88 g/cm³ bei 20°C.

Der Anteil des unvernetzten Polyethylens beträgt 5 bis 25 Gew.-% bzw. 5 bis 15 Gew.-%, und zwar ebenfalls bezogen auf die Summe der vier Komponenten (A, B, C, D).

### Vulkanisierter Kautschuk (C)

Eingesetzt werden können verschiedene Kautschuktypen, beispielsweise auf Basis Naturkautschuk (NR), Butylkautschuk (BR), Styrol-Butadien-Kautschuk (SBR), Nitrilkautschuk (NBR) oder eines Etyhlen-Propoylen-Dien-Mischpolymerisates (EPDM), wobei auf die Verträglichkeit mit dem thermoplastischen Kunststoff (A) zu achten ist, insbesondere in bezug auf die Phaseninversion.

Der eingesetzte Kautschuk ist bevorzugt ein EPDM-Kautschuk. Der dritte Monomer kann Hexadien-1,4, Dicylopentadien oder insbesondere Ethyliden-Norbonen sein.

Der mindestens teilvulkanisierte Kautschuk (C) weist einen Vernetzungsgrad > 90 %, insbesondere > 95 %, auf. Eine Methode zur Bestimmung des Vernetzungsgrades wird in dem Patent US-A-4 311 628 beschrieben.

Der Mengenanteil des Kautschuks beträgt 30 bis 50 Gew.-%, und zwar ebenfalls bezogen auf die Summe der vier Komponenten (A, B, C, D).

### Weichmacher (D)

Zum Verstrecken des Kautschuks kann jeder geeignete Weichmacher eingesetzt werden. Zum Verstrecken des EPDM-Kautschuks werden insbesondere paraffinische oder naphthalische Öle verwendet. In diesem Zusammenhang ist das Weichmacheröl zweckmäßigerweise ein paraffinisches Öl mit einem Aromatenanteil < 4 Gew.-%, und zwar bezogen auf die Gesamtmasse des Weichmachers. Insbesondere wird jedoch ein aromatenfreies paraffinisches Weichmacheröl verwendet.

Der Mengenanteil an Weichmacher beträgt 25 bis 40 Gew.-% bzw. 25 bis 50 Gew.-%, und zwar wiederum bezogen auf die Summe der vier Komponenten (A, B, C, D).

### Mischungsingredienzien (E)

Ein wesentlicher Bestandteil ist der Vernetzer bzw. das Vernetzungssystem, das zusätzlich Vernetzungshilfsmittel (z.B. Beschleuniger) beinhaltet. Vorzugsweise wird ein Vernetzer bzw. ein Vernetzungssystem auf Basis eines Phenolharzes verwendet, insbesondere in Verbindung mit einem Beschleuniger aus Zinndichlorid. Damit wird einerseits ein hoher Vernetzungsgrad des Kautschuks (C) erreicht und andererseits eine Vernetzung des Polyethylens (B) verhindert.

Zumeist enthalten die Mischungsingredienzien ferner einen Füllstoff sowie Additive, wobei bezüglich der Additive beispielsweise Alterungsschutzmittel, UV-Stabilisatoren, UV-Absorber, Farbpigmente, Flammschutzmittel, Fließmittel und/oder Prozeßhilfsmittel zu nennen sind.

Die Mischungsingredienzien sind zweckmäßigerweise in der 0,02 bis 0,5-fachen Gewichtsmenge beigefügt, und zwar bezogen auf die Summe der vier Komponenten (A, B, C, D).

Im folgenden werden nun die bevorzugten Verfahrensschritte zur Herstellung des erfindungsgemäßen thermoplastischen Vulkanisates beschrieben, und zwar in Form der beiden Varianten (u, v).

### Variante (u)

- Zunächst werden der noch unvulkanisierte Kautschuk (C) und die Mischungsingredienzien (E) ohne Vernetzer bzw. Vernetzungssystem in einen kontinuierlich arbeitenden Walzen- oder Schneckenextruder eingegeben. Der unvernetzte Kautschuk liegt dabei in einem rieselfähigen Zustand vor, vorzugsweise in Form eines rieselfähigen Pellets oder Granulates.
- Nun werden der unvulkanisierte Kautschuk (C) sowie die Mischungsingredienzien (E) aufgeschmolzen und dispergiert.
- Anschließend erfolgt die Zugabe des Weichmachers (D) unter Einmischung in die beiden vorgegebenen Bestandteile (C, E).
- Der Weichmacher (D) und die Mischungsingredienzien (E) werden dabei bevorzugt im ersten Drittel des Walzen- oder Schneckenextruders in den unvulkanisierten Kautschuk (C) eingemischt.
- Nun erfolgt die Zugabe des Gemisches aus dem thermoplastischen Kunststoff (A) und dem unvernetzten Polyethylen (B), wobei die Zugabe dieses Gemisches insbesondere nach dem ersten Drittel des Walzen- oder Schneckenextruders erfolgt. Dabei tritt ein Aufschmelzen und Dispergieren der Komponenten (A, B) unter Homogenisierung der Schmelze ein.
- Anschließend wird der Vernetzer bzw. das Vernetzungssystem zugegeben, wobei die dynamische Vulkanisation des Kautschuks (C) unter hohen Scher- und Dehngeschwindigkeiten, die mindestens 100 s⁻¹, insbesondere 500 bis 1500 s⁻¹, betragen, erfolgt. Ferner ist mit diesem Verfahrensschritt ein Entgasen der dynamisch vulkanisierten Kunststoffschmelze, insbesondere unter Vakuum, und der anschließende Druckaufbau zum Ausformen des thermoplastischen Vulkanisates verbunden. Der gesamte hier geschilderte Verfahrensschritt erfolgt bevorzugt in der zweiten Hälfte des Walzen- oder Schneckenextruders.
- Abschließend wird üblicherweise das ausgeformte thermoplastische Vulkanisat nach dem Abkühlen granuliert.

### Variante (v)

Nach einer weiteren Variante wird in einem Walzen- oder Schneckenextruder der Kautschuk (C) im noch unvulkaniserten Zustand im wesentlichen gleichzeitig mit dem thermoplastischen Kunststoff (A), dem unvernetzten Polyethylen (B), dem Weichmacher (D) und den Mischungsingredienzien (E) vermischt, jedoch ohne den Vernetzer bzw. das Vernetzungssystem. Die Einmischung erfolgt auch hier bevorzugt im ersten Drittel des Walzen- oder Schneckenextruders.

Hinsichtlich der Zugabe des Vernetzers bzw. des Vernetzungssystems und der dynamischen Vulkanisation und der Folgeschritte wird auf die Beschreibung der Variante (u) verwiesen.

Unabhängig von den beiden Varianten (u, v) erfolgt die Mischungserstellung der vier Komponenten (A, B, C, D) und der gesamten Mischungsingredienzien (E) im Einstufenprozeß.

Anhand von experimentellen Daten wird nachfolgend das erfindungsgmäße thermoplastische Vulkanisat und das Verfahren beispielsweise beschrieben.

Als Versuchslinie wurde ein Berstorff Doppelschneckenextruder ZE 25 mit einer Länge von 54 D und gleichsinnig drehenden Schnecken eingesetzt. Die maximal mögliche Schneckendrehzahl beträgt 500 min⁻¹. Die EPDM-Pellets (A) und die übrigen Mischungsingredienzien (E) einschließlich Zinndichlorid als Beschleuniger, jedoch ohne Vernetzer, werden in die Einzugsöffnung des Extruders dosiert. Nach dem Aufschmelzen der Kautschukphase wird der Weichmacher (D) eingespritzt und im ersten Drittel des Extruders eingemischt. Weiter stromabwärts wird das Gemisch aus Polypropylen (A) und Polyethylen (B) zugeführt. Nach dem Aufschmelzen und Homogenisieren der Kunststoffschmelze wird das Phenolharz zugegeben. Im Rahmen einer verfahrenstechnischen Alternative kann an dieser Stelle auch ein Vernetzungssystem, hier umfassend das Phenolharz und das Zinndichorid, zudosiert werden. In der zweiten Hälfte des Extruders erfolgt die dynamische Vulkanisation der Kautschukphase, das Entgasen der Schmelze und der Druckaufbau zum Ausformen. Der Massestrang wird in einem Wasserbecken abgekühlt und anschließend granuliert.

Das Granulat wurde 3 h bei 80°C getrocknet und anschließend auf einer Spritzgießmaschine zu Prüfkörpern verarbeitet.

In der Tabelle 1 sind beispielhaft einige Mischungsrezepturen zusammengestellt. In der Tabelle 2 sind ferner einige Materialdaten der Referenzmischungen und der erfindungsgemäßen Mischungen dargestellt. Für die gemessenen Shore Härten ist zu beachten, daß die an einem spritzgegossenen Prüfkörper ermittelten Härten erfahrungsgemäß 3 bis 5 Punkte über den an extrudierten Flachprofilen gemessenen Werten liegen. Die Mischung I stellt die Ausgangsbasis der Untersuchungen dar. Die mit 100 Teilen paraffinischen Weichmacheröl verstreckte Mischung ohne VLDPE weist eine Härte von 70 Sh A auf. Die Referenzmischungen II und III wurden durch weitere Zugabe des paraffinischen Öles weicher eingestellt. Aufgrund des hohen Ölanteiles mußten diese Mischungen mit einem Zweistufenprozeß hergestellt werden. Die Härte der mit 125 Teilen Öl verstreckten Referenzmischung II beträgt 65 Sh A bzw. 62 Sh A bei der Referenzmischung III mit 150 Teilen Öl. Die erfindungsgemäßen Mischungen IV und V wurden mit 100 Teilen Öl verstreckt. Bei den erfindungsgemäßen Mischung IV und V wurde im Vergleich zu den Mischungen I bis III ein Teil des Polypropylens durch VLDPE ersetzt. Gegenüber Mischung I sind die Mischungen IV und V bei gleichem Ölanteil 10 bzw. 13 Sh A weicher. Die Festigkeit der erfindungsgemäßen Mischung V ist mit dem Wert der härteren Mischung II vergleichbar. Bei Mischung IV wurde der Anteil der thermoplastischen Phase von 50 auf 60 Teile erhöht. Hierdurch konnte die Prozeßsicherheit bei der Herstellung des thermoplastischen Vulkanisates erhöht werden, ohne die Härte der Mischung wesentlich ansteigen zu lassen. Die Härte dieser erfindungsgemäßen Mischung IV liegt 10 Shore unter der Mischung I. Die Zug- und Druckverformungswerte der erfindungsgemäßen Mischungen IV und V sind vergleichbar oder besser als bei den Referenzmischungen I bis III.

Das erfindungsgemäße thermoplastische Vulkanisat weist eine angenehme gummiähnliche Haptik auf. Die Festigkeiten liegen über dem Niveau gleichharter ausschließlich mit Öl gestreckter thermoplastischer Vulkanisate. Durch die teilweise Substitution des Weichmachers (D) durch unvernetztes Polyethylen (B) bei gleichzeitiger Reduzierung des Polypropylensanteils (A) ist es möglich, auch weiche thermoplastische Vulkanisate kostengünstig im Einstufenprozeß auf einem Schnecken- oder Walzensystem herzustellen. Besonders durch den Einsatz eines unverstreckten rieselfähigen EPDM's, insbesondere wiederum in Verbindung mit einem aromatenfreien Weichmacheröl, lassen sich kostengünstige, weiche, helle, bewitterungsstabile thermoplastische Vulkanisate herstellen.

Die durchgeführten Untersuchungen haben zudem gezeigt, daß das neuartige thermoplastische Vulkanisat auch erhebliche Vorteile bei der Prozeßsicherheit im Compoundierverfahren bietet.

Die Morphologieumwandlung von der Phase-Phase-Morphologie (unvernetzer Kautschuk - thermoplastischer Kunststoff) in die Teilchen-Matrix-Morphologie (vulkanisierter Kautschuk - thermoplastischer Kunststoff) während der dynamischen Vulkanisation wird durch das Viskositätsverhältnis und das Massenverhältnis der Kautschukphase zur Thermoplastphase bestimmt. Besonders bei den weichen thermoplastischen Vulkanisaten wird die Morphologieumwandlung während der dynamischen Vulkanisation durch den geringen Thermoplastanteil zunehmend schwieriger. Durch die Zugabe von Poylethylen (B) bei gleichzeitiger Reduzierung des Polypropylen-Anteils (A) läßt sich ein weicheres thermoplastisches Vulkanisat bei gleichbleibend hoher Prozeßsicherheit herstellen. Da das Polyethylen (B) im wesentlichen unvernetzt vorliegt, weist das erfindungsgemäße thermoplastische Vulkanisat eine gute Fließfähigkeit auf.

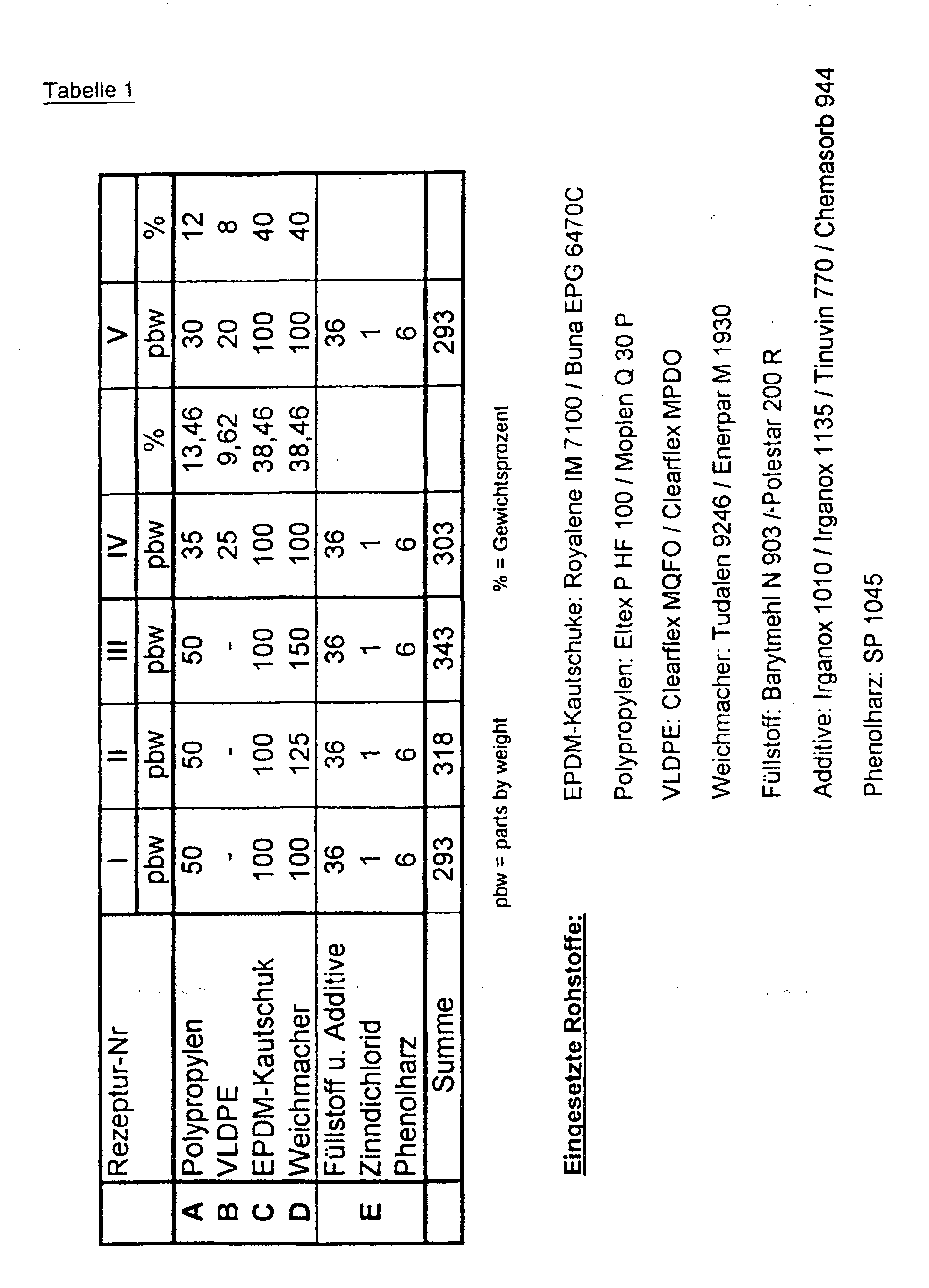

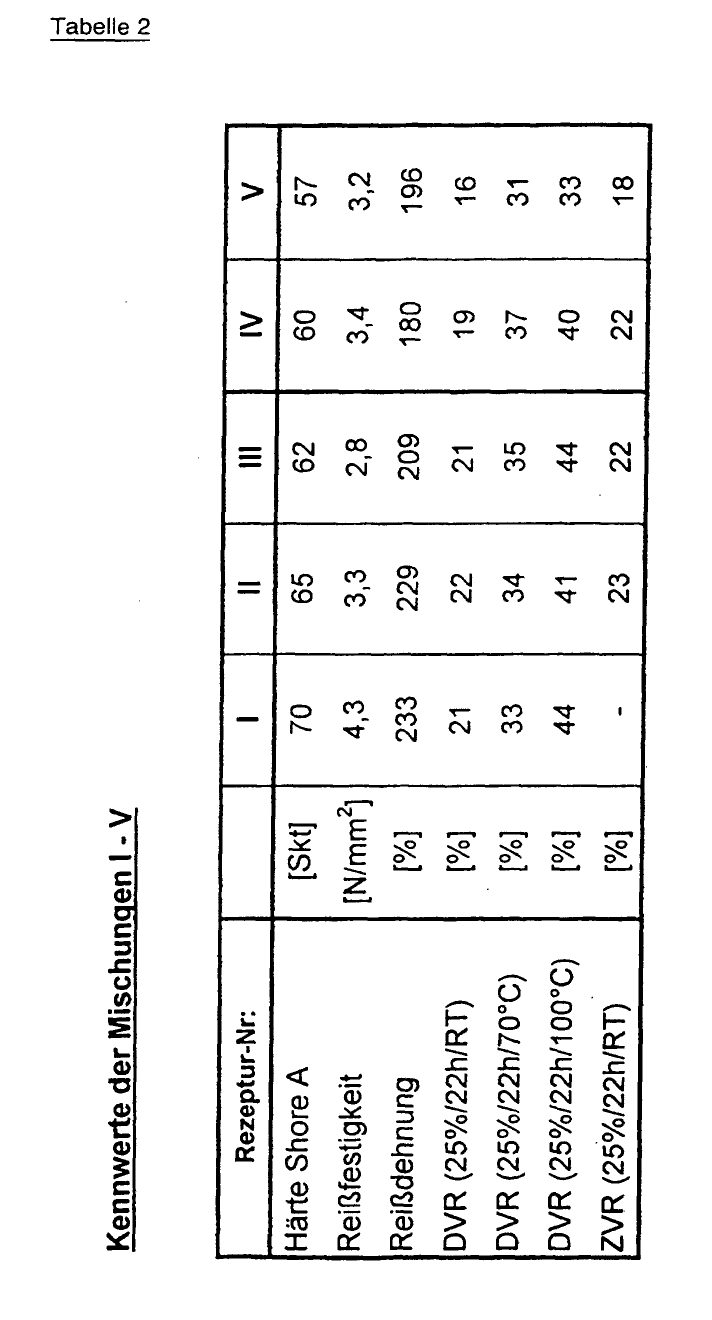

## Patentansprüche

1. Thermoplastisches Vulkanisat, bestehend aus vier Komponenten (A, B, C, D), nämlich:
- einem thermoplastischen Kunststoff (A);
- einem im wesentlichen unvernetzten Polyethylen (B);
- einem Kautschuk (C), der einen Vernetzungsgrad > 90 % aufweist und in bezug auf die Phaseninversion verträglich mit dem thermoplastischen Kunststoff (A) ist; und
- einem Weichmacher (D);
sowie ferner aus üblichen Mischungsingredienzien (E), umfassend wenigstens einen Vernetzer bzw. ein Vernetzungssystem, wobei die Mischung bezogen auf die Summe der vier Komponenten (A, B, C, D) folgende Mengenanteile (in Gew.-%) aufweist:
| | |
|---|---|
| thermoplastischer Kunststoff (A) | 5 bis 20 |
| Polyethylen (B) | 25 bis 5 oder 15 bis 5 |
| Kautschuk (C) | 30 bis 50 |
| Weichmacher (D) | 40 bis 25 oder 50 bis 25 |

2. Thermoplastisches Vulkanisat nach Anspruch 1, **dadurch gekennzeichnet, daß** die Mischungsingredienzien (E) in der 0,02 - 0,5-fachen Gewichtsmenge beigefügt sind, und zwar bezogen auf die Summe der vier Komponenten (A, B, C, D).

3. Thermoplastisches Vulkanisat nach Anspruch 1 oder 2, **dadurch gekennzeichnet, daß** der thermoplastische Kunststoff (A) ein Polypropylen auf der Basis eines Homopolymeren, Blockpolymeren oder Copolymeren ist, vorzugsweise in Verbindung mit einer hohen Kristallinität.

4. Thermoplastisches Vulkanisat nach einem der Ansprüche 1 bis 3, **dadurch gekennzeichnet, daß** das Polyethylen (B) ein VLDPE mit einer Dichte von 0,88 bis 0,91 g/cm³ bei 20°C und/oder ein ULDPE mit einer Dichte von 0,85 bis 0,88 g/cm³ bei 20°C ist.

5. Thermoplastisches Vulkanisat nach einem der Ansprüche 1 bis 4, **dadurch gekennzeichnet, daß** der Kautschuk (C) ein EPDM-Kautschuk ist, wobei der dritte Monomer vorzugsweise ein Ethyliden-Norbonen ist.

6. Thermoplastisches Vulkanisat nach einem der Ansprüche 1 bis 5, **dadurch gekennzeichnet, daß** der Kautschuk (C) einen Vernetzungsgrad > 95 % aufweist.

7. Thermoplastisches Vulkanisat nach einem der Ansprüche 1 bis 6, **dadurch gekennzeichnet, daß** der Weichmacher (D) ein Weichmacheröl, insbesondere ein paraffinisches Öl mit einem Aromatenanteil < 4 Gew.-%, vorzugsweise ein aromatenfreies paraffinisches Weichmacheröl, ist.

8. Verfahren zum Herstellen eines thermoplastischen Vulkanisates nach einem der Ansprüche 1 bis 7, **dadurch gekennzeichnet, daß** in einem Walzen- oder Schneckenextruder der Kautschuk (C) im noch unvulkanisierten Zustand zunächst mit dem Weichmacher (D) und den Mischungsingredienzien (E) vermischt wird, wobei die Mischungsingredienzien vorzugsweise noch keinen Vernetzer bzw. kein Vernetzungssystem enthalten.

9. Verfahren zum Herstellen eines thermoplastischen Vulkanisates nach Anspruch 8, **gekennzeichnet durch** folgende Verfahrensschritte:
- Einspeisen des unvulkanisierten Kautschuks (C) und der Mischungsingredienzien (E);
- Aufschmelzen und Dispergieren des Kautschuks (C) sowie der Mischungsingredenzien (E);
- Zugabe des Weichmachers (D) unter Einmischung in die beiden vorgegebenen Bestandteile (C, E).

10. Verfahren zum Herstellen eines thermoplastischen Vulkanisates nach Anspruch 8 oder 9, **dadurch gekennzeichnet, daß** der Weichmacher (D) und die Mischungsingredienzien (E) im ersten Drittel des Walzen- oder Schneckenextruders in den unvulkanisierten Kautschuk (C) eingemischt werden.

11. Verfahren zum Herstellen eines thermoplastischen Vulkanisates nach einem der Ansprüche 8 bis 10, **dadurch gekennzeichnet, daß** das Gemisch aus dem thermoplastischen Kunststoff (A) und dem unvernetzten Polyethylen (B) nach dem ersten Drittel des Walzen- oder Schneckenextruders zugegeben wird.

12. Verfahren zum Herstellen eines thermoplastischen Vutkanisates nach einem der Ansprüche 1 bis 7, **dadurch gekennzeichnet, daß** in einem Walzen- oder Schneckenextruder der Kautschuk (C) im noch unvulkanisierten Zustand im wesentlichen gleichzeitig mit dem thermoplastischen Kunststoff (A), dem unvernetzten Polyethylen (B), dem Weichmacher (D) und den Mischungsingredienzien (E) vermischt wird, wobei die Mischungsingredienzien vorzugsweise noch keinen Vernetzer bzw. Vernetzungssystem enthalten.

13. Verfahren zum Herstellen eines thermoplastischen Vulkanisates nach Anspruch 12, **dadurch gekennzeichnet, daß** der thermoplastische Kunststoff (A), das unvernetzte Polyethylen (B), der Weichmacher (D) und die Mischungsingredienzien (E) im ersten Drittel des Walzen- oder Schneckenextruders in den unvulkanisierten Kautschuk (C) eingemischt werden.

14. Verfahren zum Herstellen eines thermoplastischen Vulkanisates nach einem der Ansprüche 8 bis 13, **dadurch gekennzeichnet, daß** ein unvernetzter Kautschuk (C) verwendet wird, der in einem rieselfähigen Zustand vorliegt, vorzugsweise in Form eines rieselfähigen Pellets oder Granulates.

15. Verfahren zum Herstellen eines thermoplastischen Vulkanisates nach einem der Ansprüche 8 bis 14, **dadurch gekennzeichnet, daß** nach der Vermischung der vier Komponenten (A, B, C, D) und der Mischungsingredienzien (E) ohne Vernetzer bzw. Vernetzungssystem nun der Vernetzer bzw. das Vernetzungssystem zugegeben wird, verbunden mit folgenden Verfährensschritten:
- Dynamische Vulkanisation des Kautschuks (C) unter hohen Scher- und Dehngeschwindigkeiten;
- Entgasen der dynamisch vulkanisierten Kunststoffschmelze, insbesondere unter Vakuum;
- Druckaufbau zum Ausformen des thermoplastischen Vulkanisates.

16. Verfahren zum Herstellen eines thermoplastischen Vulkanisates nach Anspruch 15, **dadurch gekennzeichnet, daß** die gesamten Verfahrensschritte in Verbindung mit der Zugabe des Vernetzeres bzw. des Vernetzungssystemes in der zweiten Hälfte des Walzen- oder Schneckenextruders erfolgt.

17. Verfahren zum Herstellen eines thermoplastischen Vulkanisates nach einem der Ansprüche 8 bis 16, insbesondere in Verbindung mit den Ansprüchen 15 oder 16, **dadurch gekennzeichnet, daß** ein Vernetzer bzw. ein Vernetzungssystem verwendet wird, das einerseits den Kautschuk (C) vernetzt, andererseits die Vernetzung des Poyethylens (B) verhindert, vorzugsweise auf Basis eines Phenolharzes, insbesondere wiederum in Verbindung mit einem Beschleuniger aus Zinndichlorid.

18. Verfahren zum Herstellen eines thermoplastischen Vulkanisates nach einem der Ansprüche 8 bis 17, **dadurch gekennzeichnet, daß** die Mischungsherstellung der vier Komponenten (A, B, C, D) und der gesamten Mischungsingredienzien (E) im Einstufenprozeß erfolgt.

## Claims

1. A thermoplastic vulcanizate comprising four components (A, B, C, D), specifically:
- a thermoplastic synthetic resin (A);
- a substantially non-cross-linked polyethylene (B);
- an at least partially vulcanized rubber (C)having a degree of cross-linking of > 90% and compatible with the thermoplastic synthetic resin with regard to phase inversion; and
- a plasticizer (D);
as well as, furthermore, standard blend ingredients (E), comprising at least one reticulating agent or one reticulating system, wherein the mixture contains the following following quantitative proportions (in % by weight) with respect to the sum of the four components (A, B, C, D):
| | |
|---|---|
| thermoplastic synthetic resin (A) | 5 to 20 |
| polyethylene (B) | 25 to 5 or 15 to 5 |
| rubber (C) | 30 to 50 |
| plasticizer (D) | 40 to 25 or 50 to 25 |

2. The thermoplastic vulcanizate according to claim 1, **characterized in that** the ingredients (E) of the blend are added in from 0.02 to 0.5 times the amount by weight based on the sum of the four components (A, B, C, D).

3. The thermoplastic vulcanizate according to claim 1 or 2, **characterized in that in that** the thermoplastic synthetic resin (A) is a polypropylene based on a homopolymer, block polymer or copolymer preferably in conjunction with high crystallinity.

4. The thermoplastic vulcanizate according to any one of claims 1 to 3, **characterized in that** the polyethylene (B) is a VLDPE with a density of from 0.88 to 0.91 g/cm³ at 20°C and/or a ULDPE with a density of from 0.85 to 0.88 g/cm³ at 20°C.

5. The thermoplastic vulcanizate according to any one of claims 1 to 4, **characterized in that** the rubber (C) is an EPDM rubber, wherein the third monomer is preferably an ethylidenenorbonene.

6. The thermoplastic vulcanizate according to any one of claims 1 to 5, **characterized in that** the rubber (C) has a degree of cross-linking of > 95%.

7. The thermoplastic vulcanizate according to any one of claims 1 to 6, **characterized in that** the plasticizer (D) is a plasticizer oil, in particular a paraffinic oil with a component of aromatics of < 4% by weight, preferably a paraffinic plasticizer oil free of aromatics.

8. A method for producing a thermoplastic vulcanizate according to any one of claims 1 to 7, **characterized in that** the rubber (C) in the still-unvulcanized state is first mixed with the plasticizer (D) and the blend ingredients (E) in a roll or screw extruder, wherein the blend ingredients preferably still not yet contain a cross-linking agent or cross-linking system.

9. The method for producing a thermoplastic vulcanizate according to claim 8, **characterized by** the following process steps:
- feeding of the unvulcanized rubber (C) and the blend ingredients (E);
- meltdown and dispersion of the rubber (C) as well as of the blend ingredients (E); and
- addition of the plasticizer (D) while mixing with the two charged components (C, E).

10. The method for producing a thermoplastic vulcanizate according to claim 8 or 9, **characterized in that** the plasticizer (D) and the blend ingredients (E) are admixed into the unvulcanized rubber (C) in the first third part of the roll or screw extruder.

11. The method for producing a thermoplastic vulcanizate according to any one of claims 8 to 10, **characterized in that** the mixture comprised of the thermoplastic synthetic resin (A) and the non-cross-linked polyethylene (B) is added downstream of the first third part of the roll or screw extruder.

12. The method for producing a thermoplastic vulcanizate according to any one of claims 1 to 7, **characterized in that** in a roll or screw extruder, the rubber (C) in the still unvulcanized state is substantially simultaneously mixed with the thermoplastic synthetic resin (A), the non-cross-linked polyethylene (B), the plasticizer (D) and the blend ingredients (E), wherein the blend ingredients preferably not yet contain a cross-linking agent or cross-linking system.

13. The method for producing a thermoplastic vulcanizate according to claim 12, **characterized in that** the thermoplastic synthetic resin (A), the non-cross-linked polyethylene (B), the plasticizer (D) and the blend ingredients (E) are admixed into the unvulcanized rubber (C) in the first third part of the roll or screw extruder.

14. The method for producing a thermoplastic vulcanizate according to any one of claims 8 to 13, **characterized in that** a non-cross-linked rubber (C) is used, said rubber being present in a flowable state, preferably in the form of a flowable pellet or granulate.

15. The method for producing a thermoplastic vulcanizate according to any one of claims 8 to 14, **characterized in that** following mixing of the four components (A, B, C, D) and the blend ingredients (E) without the cross-linking agent or cross-linking system, the cross-linking agent or the cross-linking system is now added in conjunction with the following process steps:
- dynamic vulcanization of the rubber (C) at high shear and expansion rates;
- degassing of the dynamically vulcanized plastic melt, in particular under vacuum;
- building up the pressure for ejecting the thermoplastic vulcanizate from the mold.

16. The method for producing a thermoplastic vulcanizate according to claim 15, **characterized in that** all steps of the method connected with the addition of the cross-linking agent or cross-linking system are carried out in the second half of the roll or screw extruder.

17. The method for producing a thermoplastic vulcanizate according to any one of claims 8 to 16, in particular in association with claim 15 or 16, **characterized in that** a cross-linking agent or cross-linking system is used that cross-links the rubber (C) on the one hand, and prevents the polyethylene (B) from cross-linking on the other hand, preferably based on a phenolic resin, in particular again in connection with an accelerator consisting of tin dichloride.

18. The method for producing a thermoplastic vulcanizate according to any one of claims 8 to 17, **characterized in that** the preparation of the mixture comprised of the four components (A, B, C, D) and all of the blend ingredients (E) is carried out in a single-stage process.

## Revendications

1. Produit de vulcanisation thermoplastique se composant de quatre composants (A, B, C, D), à savoir :
- un plastique thermoplastique (A) ;
- un polyéthylène essentiellement non réticulé (B) ;
- un caoutchouc (C), qui comporte un taux de réticulation supérieur à 90 % et qui est compatible avec le plastique thermoplastique (A) par rapport à l'inversion de phase ; et
- un plastifiant (D) ;
ainsi qu'en outre, d'ingrédients de mélange (E) usuels, comprenant au moins un agent de réticulation ou, selon le cas, un système de réticulation, le mélange comportant les quantités suivantes (en % en poids) par rapport à la somme des quatre composants (A, B, C, D) :
| | |
|---|---|
| plastique thermoplastique (A) | de 5 à 20 |
| polyéthylène (B) | de 25 à 5 ou de 15 à 5 |
| caoutchouc (C) | de 30 à 50 |
| plastifiant (D) | de 40 à 25 ou de 50 à 25 |

2. Produit de vulcanisation thermoplastique selon la revendication 1, **caractérisé en ce que** les ingrédients de mélange (E) sont ajoutés dans des quantités en poids allant de 0,02 fois à 0,5 fois par rapport à la somme des quatre composants (A, B, C, D).

3. Produit de vulcanisation thermoplastique selon la revendication 1 ou 2, **caractérisé en ce que** le plastique thermoplastique (A) est un polypropylène sur la base d'un homopolymère, d'un polymère bloc ou d'un copolymère, de préférence en liaison avec une cristallinité élevée.

4. Produit de vulcanisation thermoplastique selon l'une des revendications 1 à 3, **caractérisé en ce que** le polyéthylène (B) est un VLDPE avec densité allant de 0,88 à 0,91 g/cm³ à 20°C et/ou un ULDPE avec une densité allant de 0,85 à 0,88 g/cm³ à 20°C.

5. Produit de vulcanisation thermoplastique selon l'une des revendications 1 à 4, **caractérisé en ce que** le caoutchouc (C) est un caoutchouc EPDM, le troisième monomère étant de préférence un éthylidène norbornène.

6. Produit de vulcanisation thermoplastique selon l'une des revendications 1 à 5, **caractérisé en ce que** le caoutchouc (C) comporte un taux de vulcanisation supérieur à 95 %.

7. Produit de vulcanisation thermoplastique selon l'une des revendications 1 à 6, **caractérisé en ce que** le plastifiant (D) est une huile plastifiante, en particulier une huile paraffinique avec une teneur en composés aromatiques inférieure à 4 % en poids, de préférence une huile plastifiante paraffinique exempte de composés aromatiques.

8. Procédé pour la production d'un produit de vulcanisation thermoplastique selon l'une des revendications 1 à 7, **caractérisé en ce que** le caoutchouc (C) dans un état non encore vulcanisé est mélangé, dans une extrudeuse à cylindres ou à vis, tout d'abord avec le plastifiant (D) et les ingrédients de mélange (E), les ingrédients du mélange ne comprenant de préférence pas encore d'agent de réticulation, ou selon le cas, pas de système de réticulation.

9. Procédé pour la production d'un produit de vulcanisation thermoplastique selon la revendication 8, **caractérisé par** les étapes suivantes du procédé :
- alimentation du caoutchouc non vulcanisé (C) et des ingrédients de mélange (E) ;
- fonte et dispersion du caoutchouc (C) ainsi que des ingrédients de mélange (E) ;
- adjonction du plastifiant (D) en le mélangeant dans les deux composants (C, E) allégués.

10. Procédé pour la production d'un produit de vulcanisation thermoplastique selon la revendication 8 ou 9, **caractérisé en ce que** le plastifiant (D) et les ingrédients de mélange (E) sont mélangés au caoutchouc non vulcanisé (C) dans le premier tiers de l'extrudeuse à cylindres ou de l'extrudeuse à vis.

11. Procédé pour la production d'un produit de vulcanisation thermoplastique selon l'une des revendications 8 à 10, **caractérisé en ce que** le mélange composé du plastique thermoplastique (A) et du polyéthylène non réticulé (B) est ajouté après le premier tiers de l'extrudeuse à cylindres ou de l'extrudeuse à vis.

12. Procédé pour la production d'un produit de vulcanisation thermoplastique selon l'une des revendications 1 à 7, **caractérisé en ce que** le caoutchouc (C) non encore vulcanisé est mélangé, dans une extrudeuse à cylindres ou à vis essentiellement simultanément avec le plastique thermoplastique (A), le polyéthylène non réticulé (B), le plastifiant (D) et les ingrédients de mélange (E), les ingrédients de mélange ne comprenant de préférence pas encore d'agent de réticulation ou selon le cas, de système de réticulation.

13. Procédé pour la production d'un produit de vulcanisation thermoplastique selon la revendication 12, **caractérisé en ce que** le plastique thermoplastique (A), le polyéthylène non réticulé (B), le plastifiant (D) et les ingrédients de mélange (E) sont mélangés au caoutchouc non vulcanisé (C) dans le premier tiers de l'extrudeuse à cylindres ou de l'extrudeuse à vis.

14. Procédé pour la production d'un produit de vulcanisation thermoplastique selon l'une des revendications 8 à 13, **caractérisé en ce qu'**on utilise un caoutchouc non réticulé (C), qui se présente dans un état apte à s'écouler, de préférence sous la forme d'une boulette ou d'un granulé apte à s'écouler.

15. Procédé pour la production d'un produit de vulcanisation thermoplastique selon l'une des revendications 8 à 14, **caractérisé en ce qu'**après le mélange des quatre composants (A, B, C, D) et des ingrédients de mélange (E) sans l'agent de réticulation, ou selon le cas, le système de réticulation, l'agent de réticulation ou selon le cas, le système de réticulation, est à présent ajouté, en liaison avec les étapes suivantes du procédé :
- vulcanisation dynamique du caoutchouc (C) à des vitesses de cisaillement et d'extension élevées ;
- dégazage du plastique fondu dynamiquement vulcanisé, en particulier sous vide ;
- montée de pression pour le démoulage du produit de vulcanisation thermoplastique.

16. Procédé pour la production d'un produit de vulcanisation thermoplastique selon la revendication 15, **caractérisé en ce que** l'ensemble des étapes du procédé est effectué en liaison avec l'adjonction de l'agent de réticulation, ou selon le cas du système de réticulation dans la deuxième moitié de l'extrudeuse à cylindres ou de l'extrudeuse à vis.

17. Procédé pour la production d'un produit de vulcanisation thermoplastique selon l'une des revendications 8 à 16, en particulier en liaison avec les revendications 15 ou 16, **caractérisé en ce qu'**un agent de réticulation, ou selon le cas un système de réticulation est utilisé, qui réticule d'une part le caoutchouc (C), qui empêche d'autre part la réticulation du polyéthylène (B), de préférence sur la base d'une résine phénolique, en particulier à nouveau en liaison avec un accélérateur constitué de dichlorure d'étain.

18. Procédé pour la production d'un produit de vulcanisation thermoplastique selon l'une des revendications 8 à 17, **caractérisé en ce que** la production du mélange des quatre composants (A, B, C, D) et de l'ensemble des ingrédients de mélange (E) est effectuée dans un processus direct.
